(19) Europäisches Patentamt
European Patent Office
Office européen des brevets

(11) EP 0 773 240 B1

(12) EUROPEAN PATENT SPECIFICATION

(45) Date of publication and mention of the grant of the patent:
**22.08.2001 Bulletin 2001/34**

(51) Int Cl.[7]: **C08F 10/00**, C08F 4/651, C08F 4/654

(21) Application number: **97101378.4**

(22) Date of filing: **31.01.1995**

# (54) Solid catalyst component for polymerizing olefins and catalyst for polymerization of olefins

Fester Katalysatorbestandteil für Olefinpolymersation und Olefinpolymerisationskatalysator

Composant catalytique solide pour la polymérisation d'oléfines et catalyseur de polymérisation d'oléfines

(84) Designated Contracting States:
**AT BE DE ES FR GB IT NL PT**

(30) Priority:
**28.04.1994 JP 11375494**
**18.11.1994 JP 30996294**
**19.05.1994 JP 12959494**
**31.01.1994 JP 2734494**
**23.06.1994 JP 16449594**
**23.06.1994 JP 16449694**

(43) Date of publication of application:
**14.05.1997 Bulletin 1997/20**

(62) Document number(s) of the earlier application(s) in accordance with Art. 76 EPC:
**95101305.1 / 0 665 243**

(73) Proprietor: **TOHO TITANIUM CO., LTD.**
**Chigasaki-shi, Kanagawa 253 (JP)**

(72) Inventors:
- **Hosaka, Motoki**
  **Chigasaki-city, Kanagawa (JP)**
- **Goto, Kenji**
  **Yokohama-shi, Kanagawa, 253 (JP)**
- **Matsuo, Masahiko**
  **Chigasaki-shi, Kanagawa, 253 (JP)**
- **Kataoka, Takuo**
  **Chigasaki-shi, Kanagawa, 253 (JP)**
- **Masuyama, Takahiro**
  **Koza-gun, Kanagawa (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 565 173**

Remarks:
The file contains technical information submitted after the application was filed and not included in this specification



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

This invention relates to a catalyst for the polymerization of olefins. More particularly, it relates to a catalyst for the polymerization of olefins with which an olefin polymer having high stereoregularity and broad molecular weight distribution can be obtained in high yield.

Hitherto, a large number of specific organosilicon compounds for use as an electron donor (external electron donor) as a component of a Ziegler-Natta catalyst or for use as an electron donor (internal electron donor) contained in a solid catalyst component of a Ziegler-Natta catalyst have been proposed for the purpose of producing polymers having improved stereoregularity or enhancing catalytic activity in olefin polymerization using the catalyst.

Various proposals have been made on processes for producing this kind of organosilicon compounds. For example, U.S. Patent 4,977,291 proposes a process for producing a silicon compound having at least one cycloalkyl group in which a silicon compound containing an aromatic group as a starting compound is hydrogenated in the presence of a catalyst, e.g., a Raney nickel catalyst.

U.S. Patent 4,958,041 discloses a process for producing a diorganodialkoxysilane having at least one branched alkyl group other than the two alkoxy groups in which a tetraalkoxysilane or a monoorganotrialkoxysilane is reacted with a Grignard reagent having the structural formula RMgX wherein R is an alkyl group or a cycloalkyl group and X is a halogen atom.

In JP-A-5-255350 is disclosed a cycloalkoxysilane represented by the formula $(R'O)_x(R')_ySi(OR)_{4-x-y}$ for use as an electron donor component of a Ziegler-Natta catalyst for olefin polymerization, wherein each R is independently selected from alkyl groups having 1 to 5 carbon atoms and acyl groups having 2 to 5 carbon atoms, each R' is independently selected from a cyclopentyl group, a cyclohexyl group, a cycloheptyl group, and substituted groups thereof, x is 1, 2, 3, or 4, and y is 0, 1, or 2. The term "JP-A" as used herein means an "unexamined published Japanese patent application." JP-A-5-310757 discloses tert-butoxycyclopentyldiethoxysilane as a novel silane compound and a process for producing the same.

For homo- or copolymerization of olefins a number of processes using a catalyst system comprising a solid catalyst component essentially containing magnesium, titanium, an electron donor compound, and a halogen, an organoaluminum compound, and an organosilicon compound have been proposed.

For example, JP-A-57-63310 and JP-A-57-63311 propose a process for polymerizing an olefin having 3 or more carbon atoms using a catalyst system comprising (a) a solid catalyst component containing a magnesium compound, a titanium compound and an internal electron donor, (b) an organoaluminum compound, and (c) an organosilicon compound having an Si-O-C bond. However, these processes are not always satisfactory for obtaining highly stereoregular polymers in high yield, and further improvement has been demanded.

On the other hand, JP-A-63-3010 discloses a catalyst system for the polymerization of olefins and a process for polymerizing olefins using the same, the catalyst system comprising (a) a solid catalyst component prepared by bringing a dialkoxymagnesium, an diester of aromatic dicarboxylic acid, an aromatic hydrocarbon, and a titanium halide into contact and subjecting the resulting product in a powdered state to a heat treatment, (b) an organoaluminum compound, and (c) an organosilicon compound.

JP-A-1-315406 discloses a catalyst system for olefin polymerization and a process for polymerizing an olefin using the same, the catalyst system comprising (a) a solid catalyst component prepared by bringing titanium tetrachloride into contact with a suspension of diethoxymagnesium in an alkylbenzene, adding phthalic acid dichloride thereto to react to obtain a solid product, and further contacting the resulting solid product with titanium tetrachloride in the presence of an alkylbenzene, (b) an organoaluminum compound, and (c) an organosilicon compound.

JP-A-2-84404 proposes a catalyst system for the polymerization of olefins and a process for homo- or copolymerizing an olefin(s) using the same, the catalyst system comprising (a) a solid titanium catalyst component essentially containing magnesium, titanium and a halogen which is prepared by bringing a magnesium compound and a titanium compound into contact, (b) an organoaluminum compound catalyst component, and (c) an organosilicon compound catalyst component containing a cyclopentyl group or a derivative thereof, a cyclopentenyl group or a derivative thereof, or a cyclopentadienyl group or a derivative thereof.

Each of these known techniques aims at such high catalytic activity that a step of removing residual catalyst components, such as chlorine and titanium, from the resulting polymer (a so-called de-ashing step) may be omitted and, at the same time, an improvement in yield of a stereoregular polymer or an improvement in durability of the catalytic activity for polymerization, and has achieved excellent results to their purpose.

In recent years, however, it has been pointed out that the olefin polymers obtained by polymerization using these catalyst systems comprising such a highly active catalyst component, an organoaluminum compound and an organosilicon compound have narrower molecular weight distribution as compared with those obtained by using conventional catalyst systems comprising a titanium trichloride type catalyst component in combination with an organoaluminum compound and, if desired, an electron donor compound as a third component. For polyolefins to have narrower molecular weight distribution means poorer moldability, leading to less applicability.

Various manipulations have been suggested to solve this problem. For example, adoption of a multi-stage polymerization system has been proposed for obtaining polyolefins with broader molecular weight distribution. Nevertheless, a multi-stage polymerization system requires repetition of tedious and complicated operation of polymerization and also involves a step for recovery of a chelating agent to be used for polymerization and is not therefore deemed to be favorable from the considerations of labor and cost.

As the latest technique, JP-A-3-7703 discloses a process for polymerizing an olefin in the presence of a catalyst system comprising (a) a solid titanium catalyst component essentially containing magnesium, titanium, a halogen, and an internal electron donor, (b) an organoaluminum compound, and (c) at least two organosilicon compounds as an external electron donor. According to this process, a polyolefin having broad molecular weight distribution can be obtained without involving laborious multi-stage polymerization operation. However, the use of at least two organosilicon compounds as an electron donor for polymerization makes the process still tedious and complicated.

Further, solid catalyst components containing an aluminium halide, a magnesium compound and a titanium halide as essential components, and catalysts containing such a solid catalyst component, an organic aluminium compound and as the third component, an organic acid ester or a silicone compound are known. For example, JP-A-55-161807 discloses a catalyst comprising (i) a composition obtained by pulverizing magnesium chloride, an organic acid ester, a halogenated hydrocarbon and an aluminium halide together and then carrying out heat treatment with titanium tetrachloride, (ii) an organic aluminium compound, and (iii) an organic acid ester; and JP-A-61-31402 discloses a catalyst comprising (i) a solid catalyst component obtained by reacting a reaction product of an aluminium halide and a silicone compound with a magnesium compound and then reacting with a titanium halide and an ester of phthalic acid, (ii) an organic aluminium compound and (iii) a silicone compound.

Furthermore, solid catalyst components containing an alkoxyaluminium compound, a magnesium compound and a titanium halide as essential components, and catalysts for polymerization of olefins which contain such a solid catalyst component, an organic aluminium compound and as the third component, an organic acid ester or a silicone compound are also known. For example, JP-A-57-145104 discloses a catalyst component obtained by pulverizing magnesium chloride, an organic acid ester and an alkoxyaluminium compound together and then carrying out heat treatment with titanium tetrachloride; and JP-A-1-245002 discloses a catalyst comprising (i) a solid catalyst component obtained by bringing diethoxymagnesium into contact with titanium tetrachloride, followed by addition of an trialkoxyaluminium and then reacting with phthalic dichloride, (ii) an organic aluminium compound, and (iii) an epoxy-p-menthane compound.

These solid catalyst components and catalysts as described above have been developed as a result of studies for attaining high catalitic activity in polymerization of propylene so that the amount of the solid catalyst component can be minimized and the step of removing a catalyst residue (e.g., chlorine and titanium) remaining in a resulting polymer can be omitted, for improving the yield of a stereoregular polymer, or for improving durability of the catalitic activity for polymerization, and they provide good results for the respective objects. However, none of these catalysts can produce stereoregular polymers having a density of from 0.900 to 0.906 g/ml without lowering the yield of stereoregular polymers insoluble in a polymerization solvent as used in polymerization of olefins, particularly polymerization of propylene, according to the slurry method.

In the case where olefins, particularly propylene are polymerized by the slurry method in the presence of the aforesaid highly active catalyst, the resulting polymer has a high stereoregularity and is obtained in a high yield as compared with the case where a catalyst comprising a conventional titanium trichloride type solid catalyst component, an organic aluminium compound and an electron donor compound is used. However, the density of the resulting polymer tends to be higher than 0.906 g/ml, giving rise to various problems, e.g., breaking in rapid rolling rate and deterioration in transparency of a film product molded by a BOPP molding.

It has been known that the density of the resulting polymer can be controlled to some extent by lowering the polymerization temperature or introducing a small amount of ethylene as a comonomer into the polymerization system of olefins (particularly propylene) in the presence of the aforesaid highly active catalyst. In case of the slurry method, however, an undesirable phenomenon occurs that a low molecular weight polymer which is soluble in a polymerization solvent is formed at a high rate, and in the polymerization of propylene or copolymerization of propylene and ethylene, an atactic polypropylene which has an extremely poor stereoregularity is generated at a high rate. The atacticity can be evaluated in terms of the content of soluble portions of the resulting polymer or copolymer in a polymerization solvent, which is hereafter referred to "RDS" (the content of reactor diluent solubles).

Increase of the RDS in the slurry polymerization gives rise to problems with respect to the production cost of a polymer and the stability in operation because a reactor and a pipeline are stained, and an extraction step is required after separation of the particles of a resulting polymer from a polymerization solvent. Further, generation of fine powders contained in the resulting polymer, particularly those having a particle size of 100 micron or less, tend to cause clogging in a pipeline in the polymerization process, and other problems in the step of separation and drying of the polymer.

EP-A-565173 discloses a catalyst for the polymerization of olefins, said catalyst comprising a solid catalyst component, an organic aluminum compound and an organic silicon compound being a dicyclohexyldialkoxy silane. In

Example 1, the solid catalyst component is obtained by contacting diethoxy magnesium, titanium tetrachloride, diethyl phthalate and diisooctyl phthalate. The organic aluminum compound and the organic silicon compound used in Example 1 are triethyl aluminum and dicyclohexyldimethoxy silane, respectively.

The object of the present invention is to provide a catalyst for the polymerization of olefins which can eliminate the above-mentioned problems associated with the conventional techniques, i.e., a catalyst system which exhibits high polymerization activity through simpler operation and provides an olefin polymer having broad molecular weight distribution while maintaining a satisfactory yield of a highly stereoregular polymer.

As a result of extensive investigations, the present inventors have found that an olefin polymer having high stereoregularity and broad molecular weight distribution can be obtained in high yield by polymerizing an olefin(s) in the presence of a catalyst comprising (A) a specific solid catalyst component, (B) an organoaluminum compound, and (C) a specific organosilicon compound. The present invention has been completed based on this finding.

The present invention provides a catalyst for the polymerization of olefins comprising:

(A) a solid catalyst component prepared by contacting compounds (a') to (d'):

(a') a magnesium compound represented by $Mg(OR^8)_{2-p}X^3_p$ wherein $R^8$ represents an alkyl group having 1 to 4 carbon atoms or a phenyl group, $X^3$ represents chlorine or bromine, and p represents 0 or 1;
(b') a titanium compound represented by $Ti(OR^9)_qX^4_{4-q}$ wherein $R^9$ represents an alkyl group having 1 to 4 carbon atoms, $X^4$ represents a halogen, and q is 0, 1, 2 or 3;
(c') at least one phthalic diester represented by

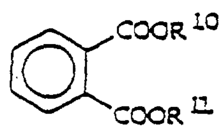

wherein $R^{10}$ and $R^{11}$ may be the same or different and each represents an alkyl group having 1 to 4 carbon atoms; and
(d') at least one phthalic diester represented by

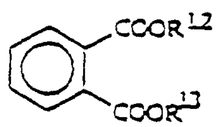

wherein $R^{12}$ and $R^{13}$ may be the same or different and each represents an alkyl group having 4 to 12 carbon atoms, provided that the total number of carbon atoms of $R^{12}$ and $R^{13}$ is from 10 to 20 ;

(B) an organoaluminum compound; and

(C) at least one organosilicon compound selected from the group consisting of (1) di-n-propyl dimethoxysilane, (2) di-iso-propyl dimethoxysilane, (3) di-n-butyl dimethoxysilane, (4) di-iso-butyl dimethoxysilane, (5) di-t-butyl dimethoxysilane, (6) dicyclopentyl dimethoxysilane, and (7) cyclohexyl cyclopentyl dimethoxysilane.

Fig. 1 is a chart showing the results of MS with which cyclohexylcyclopentyldimethoxysilane was identified.

Fig. 2 is a chart showing the results of two-dimensional analysis by $^1H$-NMR/$^{13}C$-NMR (COSY spectrum) with which cyclohexylcyclopentyldimethoxysilane was identified.

Fig. 3 is a chart showing the results of IR with which cyclohexylcyclopentyldimethoxysilane was identified.

The solid catalyst component is prepared by contacting compounds (a') to (d'):

(a') a magnesium compound represented by $Mg(OR^8)_{2-p}X^3_p$ (wherein each $R^8$ independently represents an alkyl group having 1 to 4 carbon atoms or a phenyl group, $X^3$ represents chlorine or bromine, and p represents 0 or 1);
(b') a titanium compound represented by $Ti(OR^9)_qX^4_{4-q}$ (wherein $R^9$ represents an alkyl group having 1 to 4 carbon atoms, $X^4$ represents a halogen, and q is 0, 1, 2 or 3

(c') at least one phthalic diester represented by

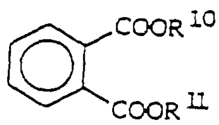

(wherein $R^{10}$ and $R^{11}$ may be the same or different and each represents an alkyl group having 1 to 4 carbon atoms); and

(d') at least one phthalic diester represented by

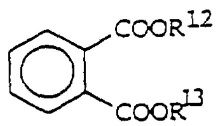

(wherein $R^{12}$ and $R^{13}$ may be the same or different and each represents an alkyl group having 4 to 12 carbon atoms, provided that the total number of carbon atoms of $R^{12}$ and $R^{13}$ is from 10 to 20).

The solid catalyst component contains the following phthalic diester compounds (e') to (g'):

(e')

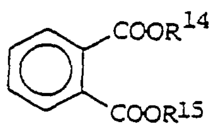

(wherein $R^{14}$ and $R^{15}$ may be the same or different and each represents an alkyl group having 1 to 4 carbon atoms);

(f')

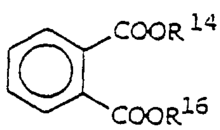

(wherein $R^{16}$ represents an alkyl group having 5 to 12 carbon atoms);

(g')

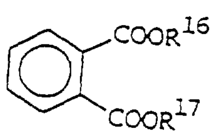

(wherein $R^{17}$ represents an alkyl group having 4 to 12 carbon atoms, provided that the total number of carbon atoms of $R^{16}$ and $R^{17}$ is from 10 to 20).

As described above, the solid catalyst component is prepared by contacting the magnesium compound (a'),

the titanium compound (b'), the phthalic diester (c'), and the phthalic diester (d'), and contains the phthalic diester (e'), the phthalic diester (f'), and the phthalic diester (g').

Examples of the magnesium compound (a') include dialkoxymagnesiums such as dimethoxymagnesium, diethoxymagnesium, di-n-propoxymagnesium, diisopropoxymagnesium, di-n-butoxymagnesium, diisobutylmagnesium, methoxyethoxymagnesium, methoxypropoxymagnesium, methoxy-n-butoxymagnesium, and ethoxy-n-propoxymagnesium; diaryloxymagnesiums such as diphenoxymagnesium; alkoxymagnesium halides such as methoxymagnesium chloride, ethoxymagnesium chloride, methoxymagnesium bromide, and ethoxymagnesium bromide; and aryloxymagnesium halides such as phenoxymagnesium chloride and phenoxymagnesium bromide. Of these, dimethoxymagnesium, diethoxymagnesium, and dipropoxymagnesium, are preferred. In particular, diethoxymagnesium is preferably used. These magnesium compounds may be used alone or in combination of two or more thereof as compound (a').

The magnesium compound (a') is preferably a particulate compound which has an average particle diameter of from 10 to 150 μm and contains no fine particles of 1 μm or smaller. Such particle properties are preferred in that the solid catalyst component obtained using this magnesium compound has a reduced fine-particle content, and that the use of this catalyst component not only yields a polymer having a reduced content of fine polymer particles but also leads to an improvement in catalytic activity.

Compound (b') is at least one titanium compound selected from titanium tetrahalides and alkoxytitanium halides. Examples of the titanium tetrahalides include $TiCl_4$, $TiBr_4$, and $TiI_4$, and examples of the alkoxytitanium halides include $Ti(OCH_3)Cl_3$, $Ti(OC_2H_5)Cl_3$, $Ti(OC_3H_7)Cl_3$, $Ti(O\text{-}n\text{-}C_4H_9)Cl_3$, $Ti(CCH_3)_2Cl_2$, $Ti(OC_2H_5)_2Cl_2$, $Ti(OC_3H_7)_2Cl_2$, $Ti(O\text{-}n\text{-}C_4H_9)_2Cl_2$, $Ti(OCH_3)_3Cl$, $Ti(OC_2H_5)_3Cl$, $Ti(OC_3H_7)_3Cl$, and $Ti(O\text{-}n\text{-}C_4H_9)_3Cl$. These titanium compounds are used alone or in combination of two or more thereof. Preferred of these are the titanium tetrahalides, especially $TiCl_4$.

At least one phthalic diester (c') (hereinafter referred to as "first ester") and at least one phthalic diester (d') (hereinafter referred to as "second ester") are used. Namely, at least two kinds of phthalic diesters are used.

Examples of the first ester include dimethyl phthalate, diethyl phthalate, di-n-propyl phthalate, diisopropyl phthalate, di-n-butyl phthalate, diisobutyl phthalate, ethyl methyl phthalate, methyl isopropyl phthalate, ethyl n-propyl phthalate, and ethyl n-butyl phthalate. These esters may be used alone or in combination of two or more thereof.

Examples of the second ester include di-n-pentyl phthalate, diisopentyl phthalate, dihexyl phthalate, di-n-heptyl phthalate, di-n-octyl phthalate, bis(2-methylhexyl) phthalate, bis(2-ethylhexyl) phthalate, di-n-nonyl phthalate, diisodecyl phthalate, bis(2,2-dimethylheptyl) phthalate, n-butyl isohexyl phthalate, n-butyl isooctyl phthalate, n-pentyl hexyl phthalate, n-pentyl isohexyl phthalate, isopentyl heptyl phthalate, n-pentyl isooctyl phthalate, n-pentyl isononyl phthalate, isopentyl n-decyl phthalate, n-pentyl undecyl phthalate, isopentyl isohexyl phthalate, n-hexyl isooctyl phthalate, n-hexyl isononyl phthalate, n-hexyl n-decyl phthalate, n-heptyl isooctyl phthalate, n-heptyl isononyl phthalate, n-heptyl neodecyl phthalate, and isooctyl isononyl phthalate. These esters may be used alone or in combination of two or more thereof.

Combinations of the first ester and the second ester are not particularly limited. However, preferred combinations are those in which the difference between the total number of carbon atoms of $R^{10}$ and $R^{11}$ in the first ester and the total number of carbon atoms of $R^{12}$ and $R^{13}$ in the second ester is 6 or larger, preferably from 8 to 18, preferably from 10 to 18, especially preferably from 10 to 16. Examples of such preferred combinations are given in Table 1.

TABLE 1

| | First Ester | Second Ester |
|---|---|---|
| (1) | Diethyl phthalate | Di-n-pentyl phthalate |
| (2) | Diethyl phthalate | Diphthalate of $C_{6\text{-}12}$ n-alcohol |
| (3) | Diethyl phthalate | Bis(2-ethylhexyl) phthalate |
| (4) | Dimethyl phthalate | Diisopentyl phthalate |
| (5) | Dimethyl phthalate | Bis(2-ethylhexyl) phthalate |
| (6) | Di-n-propyl phthalate | Bis(2-methylhexyl) phthalate + bis(2-ethylhexyl) phthalate |
| (7) | Diethyl phthalate + di-n-butyl phthalate | Bis(2-ethylhexyl) phthalate |
| (8) | Dimethyl phthalate + diethyl phthalate | Bis(2-ethylhexyl) phthalate |
| (9) | Dimethyl phthalate + diethyl phthalate | Bis(2-ethylhexyl) phthalate + di-n-hexyl phthalate |
| (10) | Diethyl phthalate + diisobutyl phthalate | Bis(2-ethylhexyl) phthalate + di-n-hexyl phthalate |

In preparing the solid catalyst component, it is necessary to use a combination of at least one of the above-enumerated first esters and at least one of the above-enumerated second esters. These first and second esters may be used in combination with one or more other electron-donor compounds. Examples of such electron-donor compounds include other phthalic diester compounds, mono- or diesters of cyclohexanecarboxylic acids, esters of aromatic monocarboxylic acids, (e.g., benzoic acid), diesters of dicarboxylic acids, (e.g., adipic acid), carbonic esters, and ethers.

Examples of preferred combinations are given in Table 2.

TABLE 2

| | First Ester | Second Ester | Other Electron-donating compound |
|---|---|---|---|
| (1) | Diethyl phthalate | Di-n-octyl phthalate | Ethyl benzoate |
| (2) | Diethyl phthalate | Bis(2-ethylhexyl) phthalate | Ethyl p-toluate |
| (3) | Di-n-propyl phthalate | Bis(2-ethylhexyl) phthalate | Diethyl carbonate |
| (4) | Diethyl phthalate | Bis(2-ethylhexyl) phthalate | Diisodecyl adipate |
| (5) | Diethyl phthalate | Bis(2-ethylhexyl) phthalate | Diethyl ether |

The solid catalyst component is obtained by contacting a combination of at least one first ester and at least one second ester, which esters differ from each other in carbon number, with the Mg compound and the Ti compound. This solid catalyst component functions to enable a polyolefin to have not only a significantly broadened molecular weight distribution but greatly improved crystallinity.

In preparing the solid catalyst component by contacting the above-described compounds (a') to (d'), these compounds may be contacted in the absence of an inert organic solvent. However, from the standpoints of reaction control and easiness of operation, it is preferred to contact the compounds in the presence of an inert organic solvent. Examples of the inert organic solvent include saturated hydrocarbons, e.g., hexane, heptane, and cyclohexane; aromatic hydrocarbons, e.g., benzene, toluene, xylene, and ethylbenzene; and halogenated hydrocarbons, e.g., o-dichlorobenzene, methylene chloride, carbon tetrachloride, and dichloroethane. Of these, benzene, toluene, xylene, and ethylbenzene are preferred, which are aromatic hydrocarbons having a boiling point of from 90°C to 150°C. The amount of such an inert organic solvent is not particularly limited, but it is preferably such that the proportion of the solvent to the titanium compound (b') is from 0.1 to 10 by volume.

The sequence of the contacting of the compounds used is not limited. Examples of the sequence of contacting are shown in Table 3. It is, however, preferred that the first ester (c') be contacted at a lower temperature than the second ester (d'). Consequently, compound (a') or a mixture of compounds (a') and (b') should be first contacted with compound (c'), and is then contacted with compound (d') desirably at a higher temperature. Each compound may be contacted repeatedly. In particular, repeatedly contacting compound (b') or (c') enhances the function of producing a polymer having a broadened molecular weight distribution and heightened crystallinity.

TABLE 3

| | |
|---|---|
| (1) | (a') + (b') - (c') - (d') |
| (2) | (a') + (b') - (c') - (d') - (b') |
| (3) | (a') + (b') - (c') - (d') - (b') -(b') |
| (4) | (a') + (b') - (c') - (d') - (c') -(b') |
| (5) | (a') + (b') - (c') - (d') - (b') -(c') |
| (6) | (a') + (b') - (c') - (d') - ( b') -(d') |
| (7) | (a') + (b') - (c') - (d') - (c') -(d') - (b') |
| (8) | (a') + (b') - (c') - (d') - (b') -(c') - (d') -(b') |
| (9) | (a') + (c') - (b') - (d') |
| (10) | (a') + (c') - (b') - (d') - (b') |
| (11) | (a') + (c') - (b') - (b') - (d') |
| (12) | (a') + (c') - (d') - (b') - (b') |
| (13) | (a') + (c') - (d') - (b') - (b') - (c') |

The following are examples of methods for preparing the solid catalyst component.

Method 1: Compound (a') and compound (b') are contacted with each other at a temperature of from -20 to 100°C, preferably from -10 to 70°C, more preferably from 0 to 30°C, in an inert organic solvent such as toluene, and then reacted at a temperature of from 0 to 130°C, preferably from 70 to 120°C. Compound (c') is then added thereto at a temperature of from -20 to 130°C, preferably from 30 to 70°C, to contact the ingredients together. Thereafter, compound (d') is added thereto at a temperature of from -20 to 130°C, preferably from 10 to 130°C, more preferably from 80 to 115°C, to contact the ingredients together. In this method, compound (c') is preferably contacted at a lower temperature than compound (d'). Compound (c') and/or compound (d') may be repeatedly added as shown in Table 3, (4) to (8). It is also possible to change the temperature at which compound (c') or (d') is added and reacted. For example, the first addition of compound (c') is conducted at a temperature of from -10 to 10°C and the second addition

thereof is conducted at a temperature of from 40 to 70°C, while the first addition of compound (d') is conducted at a temperature of from 40 to 70°C and the second addition thereof is conducted at a temperature of from 80 to 150°C.

Method 2: As shown in Table 3, (9) to (11), compound (a') is first contacted with compound (c'). This contacting is performed in an inert organic solvent at a temperature of from -20 to 70°C, preferably from 0 to 50°C, more preferably from 0 to 30°C. Compound (b') is then contacted at a temperature of from -20 to 100°C, preferably from 0 to 30°C, more preferably from 10 to 30°C. Thereafter, compound (d') is contacted at a temperature of from -20 to 130°C, preferably from 10 to 130°C, more preferably from 80 to 115°C, and the ingredients are then reacted at a temperature of from 0 to 130°C, preferably from 70 to 120°C. In this method also, compound (c') and (d') may be added repeatedly. Further, the temperature at which compound (c') or (d') is added and reacted may be changed. For example, compound (c') is first added to the organic solvent containing compound (a') at a temperature of from -10 to 10°C and the second addition of compound (c') is conducted at a higher temperature, e.g., from 40 to 70°C. On the other hand, compound (d') is first added at a temperature of from 40 to 70°C and the second addition thereof is conducted at a temperature of from 80 to 11.5°C.

Method 3: As shown in Table 3, (12) and (13), compound (a') is first contacted with compound (c') and compound (d'). This contacting is performed in an organic solvent at a temperature of from -20 to 120°C, preferably from 0 to 100°C, more preferably from 10 to 70°C. Compound (b') is then contacted at a temperature of from -20 to 100°C, preferably from 0 to 30°C, more preferably from 10 to 60°C. After the contacting of the compounds, the mixture is heated to a temperature of from 0 to 130°C, preferably from 70 to 120°C, to react the compounds. Thereafter, compound (c') and/or compound (d') is further added and reacted at a temperature different from the temperature for the first addition thereof. For example, the first addition of compound (c') and/or compound (d') is performed at a temperature of from 10 to 30°C and the second addition thereof is performed at a temperature of from 30 to 70°C.

The duration for which compounds are contacted in each contacting operation is not particularly limited, but it is generally from 30 minutes to 5 hours, desirably from 1 to 3 hours. The intermediate reaction product formed by each contacting of compounds may be isolated and washed with an inert organic solvent, before being subjected to subsequent contacting with another compound. Further, the repeated contacting of compound (b') is preferred in improving the performances of the catalyst component, and is effective especially in widening the molecular weight distribution of the polymer to be yielded and increasing the crystallinity thereof.

The proportions of the compounds to be used cannot be specified unconditionally because they vary depending on preparation method. In general, however, the amount of compound (b') may be from 0.5 to 100 mol, preferably from 1 to 10 mol, that of compound (c') may be from 0.01 to 0.5 mol, preferably from 0.02 to 0.2 mol, and that of compound (d') may be from 0.01 to 0.5 mol, preferably from 0.02 to 0.3 mol, each being per mol of compound (a').

The thus-prepared solid catalyst component contains phthalic diester compounds (e'), (f'), and (g') described hereinabove. Of-these compounds, compound (e') is the same as compound (c') and consists of one or more phthalic diesters. Compound (g') is the same as compound (d') and consists of one or more phthalic diesters.

Examples of compound (f') include n-butyl 2-ethylhexyl phthalate, isobutyl 2-ethylhexyl phthalate, methyl n-pentyl phthalate, ethyl n-pentyl phthalate, n-pentyl n-propyl phthalate, isopentyl n-propyl phthalate, n-hexyl methyl phthalate, ethyl n-hexyl phthalate, hexyl n-propyl phthalate, n-heptyl methyl phthalate, ethyl n-heptyl phthalate, n-heptyl propyl phthalate, methyl n-octyl phthalate, ethyl n-octyl phthalate, ethyl 2-ethylhexyl phthalate, n-octyl n-propyl phthalate, methyl n-nonyl phthalate, ethyl n-nonyl phthalate, n-nonyl n-propyl phthalate, n-decyl methyl phthalate, n-decyl ethyl phthalate, n-decyl n-propyl phthalate, isodecyl methyl phthalate, isodecyl ethyl phthalate, isodecyl n-propyl phthalate, methyl n-undecyl phthalate, ethyl n-undecyl phthalate, n-propyl n-undecyl phthalate, methyl n-dodecyl phthalate, ethyl n-dodecyl phthalate, and n-propyl n-dodecyl phthalate. One or more of these phthalates are contained as compound (f').

The proportions of the above-described compounds (e'), (f'), and (g') contained in the solid catalyst component are as follows. The amount of compound (e') is from 1 to 15 parts by weight, preferably from 3 to 10 parts by weight, that of compound (f') is from 0 to 10 parts by weight, preferably from 0 to 7 parts by weight, and that of compound (g') is from 0.5 to 15 parts by weight, preferably from 1 to 7 parts by weight, each being per 100 parts by weight of the solid catalyst component. The total amount of compounds (e') to (g') contained in the solid catalyst component is from 5 to 40 parts by weight, preferably from 7 to 30 parts by weight, per 100 parts by weight of the solid catalyst component.

Besides the phthalic diesters described above, the solid catalyst component further contains Mg, Ti, and a halogen as other essential ingredients. The proportions of these elements are as follows. The number of Ti atoms is from 0.01 to 0.2, preferably from 0.02 to 0.1, per atom of Mg, and the number of halogen atoms is from 10 to 100, preferably from 20 to 60, per atom of Mg. The surface area of the solid catalyst component is from 50 to 500 $m^2/g$, preferably from 150 to 500 $m^2/g$, and the average particle size thereof is from 3 to 150 μm, preferably from 5 to 50 μm.

Organoaluminum compound (B) which can be used in the present invention includes compounds represented by $R^3_yAlY_{3-y}$, wherein $R^5$ represents a straight chain or branched chain alkyl group, preferably having up to 15 carbon atoms, more preferably up to 5 carbon atoms; Y represents a hydrogen atom, a halogen atom, or an alkoxyl group preferably having up to 4 carbon atoms; and y represents a real number of 1 to 3.

Specific examples of organoaluminum compound (B) include trialkylaluminiums such as triethylaluminium and triisobutylaluminium; dialkylaluminium halides such as diethylaluminium bromide, diethylaluminium chloride and dibutylaluminium chloride; alkylaluminium sesquihalides such as ethylaluminium sesquichloride and butylaluminium sesquichloride; alkylaluminium alkoxides such as diethylaluminium ethoxide and dibutylaluminium butoxide; alkylaluminium hydrides such as diethylaluminium hydride, dibutylaluminium hydride and ethylaluminium hydride; and a mixture thereof. Of these, triethylaluminium and triisobutylaluminium are preferred.

Compoment (C) is at least one organosilicon compound selected from the group consisting of (1) di-n-propyl dimethoxysilane, (2) di-iso-propyl dimethoxysilane, (3) di-n-butyl dimethoxysilane, (4) di-iso-butyl dimethoxysilane, (5) di-t-butyl dimethoxysilane, (6) dicyclopentyl dimethoxysilane, and (7) cyclohexyl cyclopentyl dimethoxysilane.

The organosilicon compound used in the present invention is useful as an (internal and/or external) electron donor for various olefin polymerization catalysts. Namely, the organosilicon compound can be used as an electron donor in the homo- or copolymerization of ethylene, propylene, 1-butene, 1-pentene, 4-methyl-1-pentene, vinylcyclohexane, etc. In particular, the organosilicon compound is suitable for use as an electron donor of a catalyst for the homopolymerization of ethylene or propylene or the copolymerization of ethylene and propylene, and the optimal use thereof is as an electron donor of a catalyst for the homopolymerization of propylene or the copolymerization of propylene and ethylene.

Component (C) used in the present invention can be prepared by various methods.

For example, cyclopentyl chloride (commercial product) is first reacted with magnesium in the presence of a solvent, e.g., an ether such as tetrahydrofuran, diethyl ether, or di-n-butyl ether, to yield a cyclopentyl Grignard reagent (cyclopentylmagnesium chloride). This reaction may be carried out at a temperature of from room temperature to 60°C. The cyclopentyl Grignard reagent is then reacted with cyclohexyltrimethoxysilane to obtain cyclohexylcyclopentyldimethoxysilane; this reaction may be conducted in the presence of an ether such as tetrahydrofuran, diethyl ether, or di-n-butyl ether as in the above-described first reaction, or in the presence of an aliphatic hydrocarbon solvent such as hexane or heptane or an aromatic hydrocarbon solvent such as toluene, benzene, or xylene. This reaction may be carried out at a temperature of from 50°C to 200°C, preferably at a temperature of from 100°C to 200°C or at a temperature of from 100°C to 200°C under boiling or refluxing of the solvent.

Although the cyclohexyltrimethoxysilane employed above for use in the above reaction may be a commercial product, it may be prepared by various known methods. In one method, the desired compound is prepared by reacting cyclohexyltrichlorosilane with methanol to alkoxylate the silane compound with the evolution of hydrogen chloride. Although the cyclohexyltrichlorosilane for use in this reaction may be a commercial product, it may be easily prepared by the hydrosilylation reaction of cyclohexene with trichlorosilane ($HSiCl_3$). Another method for preparing cyclohexyltrimethoxysilane comprises hydrogenating a commercial product of phenyltrimethoxysilane in the presence of a catalyst, e.g., a Raney nickel catalyst.

The cyclohexylcyclopentyldimethoxysilane thus produced can be identified by nuclear magnetic resonance spectroscopy ($^1H$-NMR, $^{13}C$-NMR), infrared absorption spectrometry (IR), mass spectrometry (MS), etc. $^{13}C$-NMR spectrometry (in $CDCl_3$) gives a spectrum which has a signal at $\delta = 50.7$ attributable to the carbon atoms of the methoxy groups, signals at $\delta = 24.5$, 26.8, 26.9, and 27.8 attributable to the cyclohexyl group, and signals at $\delta = 22.8$, 26.7, and 27.4 attributable to the cyclopentyl group. IR spectrometry gives a spectrum having a peak at around 1,100 $cm^{-1}$ attributable to the Si-O-C bonds.

The organosilicon compound used in the present invention, when used as an electron donor serving as one component of a Ziegler-Natta catalyst for olefin polymerization, makes it possible to obtain a polyolefin having a broad molecular weight distribution and high crystallinity while retaining high performances with respect to catalytic activity and the yield of highly stereoregular polymer which performances are not lower than those conventionally known as high-performance catalysts.

It is preferred to wash the solid catalyst component (A) in an inert organic solvent such as heptane, whereby unreacted substances can be removed. With or without drying, the washed component (A) is mixed with the organic aluminium compound (B) and the silicone compound (C) as described in detail above, to thereby form the catalyst for polymerizing olefins of the present invention.

The catalyst of the present invention can be prepared by bringing the above-described components (A), (B) and (C) into contact. There is no particular limitation on the order in contact of the components (A), (B) and (C). In general, the component (B) is brought into contact with the component (C) and subsequently with the component (A), or the component (B) is brought into contact with the component (A) and subsequently with the component (C).

Recommended combinations of the components (A), (B), and (C) are tabulated in Table 4 below.

TABLE 4

| Solid Catalyst Component (A) (Process of Preparation) | Organo-aluminum Compound (B) | Organosilicon Compound (C) |
|---|---|---|
| process (7) | triethylaluminum | cyclohexylcyclopentyldimethoxysilane |
| process (8) | triethylaluminum | cyclohexylcyclopentyldimethoxysilane |
| process (10) | triethylaluminum | cyclohexylcyclopentyldimethoxysilane |
| process (12) | triethylaluminum | cyclohexylcyclopentyldimethoxysilane |
| process (13) | triethylaluminum | cyclohexylcyclopentyldimethoxysilane |

The amounts of components (B) and (C) are from 5 to 1,000 mol and from 0.002 to 0.5 mol, respectively, per mol of the titanium atom contained in the solid catalyst component (A).

Polymerization reaction may be carried out in the presence or absence of an organic solvent. The olefin monomer to be polymerized may be used in either a gaseous state or a liquid state. The polymerization is conducted at a temperature of not higher than 200°C, preferably not higher than 100°C, under a pressure of not higher than 10 MPa, preferably not higher than 5 MPa. The reaction may be effected either in a continuous system or in a batch system and through one step or two or more steps.

The olefins to be homo- or copolymerized are not particularly limited and generally have 2 to 20 carbon atoms, such as ethylene, propylene, 1-butene, 1-pentene, 4-methyl-1-pentene, and vinylcyclohexane. These olefins may be used either individually or in combination of two or more thereof. The effects of the present invention in assuring high stereoregularity, broad molecular weight distribution, and high yield are particularly pronounced in homopolymerization of propylene or copolymerization of propylene and ethylene.

For ensuring the improvements in catalytic activity and stereoregularity and particle properties of the polymer produced, it is preferable to conduct pre-polymerization prior to substantial polymerization. Monomers to be pre-polymerized include not only ethylene and propylene but other monomers, such as styrene and vinylcyclohexane.

The catalyst of the present invention is used in an amount of 0.005 to 0.5 mmol, preferably 0.01 to 0.5 mmol, calculated as titanium atom in solid catalyst component (A) per liter of the polymerization zone.

By using the catalyst of the present invention, the olefin polymers obtained have a broader molecular weight distribution than those obtained by conventional processes, by at least 1 higher as expressed in terms of the ratio of weight average molecular weight to number average molecular weight (Mw/Mn) of the olefin polymers, and the yield of stereoregular polymers is extremely high. That is, the process has been confirmed to provide polyolefins having not only broad molecular weight distribution (for example, 6 or higher in terms of the Mw/Mn) but high stereoregularity in extremely high yield.

The present invention will now be illustrated in greater detail with reference to Examples in view of Comparative Examples. All the percents are by weight unless otherwise indicated.

EXAMPLE 1

Into a 2-liter four-necked flask equipped with a stirrer, thermometer, Dimroth condenser, and dropping funnel was introduced 18.5 g (0.76 mol) of magnesium shavings. The magnesium was dried in an argon stream, and 20 ml of di-n-butyl ether was then added thereto. The contents were cooled to room temperature, and a small amount of 1,2-dibromoethane was added thereto to activate the magnesium. A solution prepared by dissolving 79.6 g (0.76 mol) of cyclopentyl chloride in 600 ml of di-n-butyl ether was then added dropwise over a period of 3.5 hours, during which the temperature of the system spontaneously increased to 50°C. Subsequently, 143.0 g (0.70 mol) of cyclohexyltrimethoxysilane was added thereto at room temperature, and the reaction was then conducted for 1 hour under reflux.

After completion of the reaction, the reaction mixture was cooled to room temperature, and 372 g (0.38 mol) of a 10% aqueous sulfuric acid solution was added thereto dropwise at a temperature of 40°C or lower. The organic layer was washed with 300 ml of a 1% aqueous sodium hydrogen carbonate solution and then dried over anhydrous magnesium sulfate. After the drying agent was filtered off, vacuum distillation was performed to obtain 143.6 g of a fraction having a boiling point of 78°C at 0.2 Torr. The yield was 84.6%. This reaction product was ascertained to be cyclohexylcyclopentyldimethoxysilane by MS, two-dimensional analysis with $^{1}$H-NMR/$^{13}$C-NMR, and IR. The results of MS, $^{1}$H-NMR/$^{13}$C-NMR (COSY spectrum), and IR are shown in Figs. 1, 2, and 3, respectively.

The analyses by MS, $^{1}$H-NMR/$^{13}$C-NMR, and IR were carried out under the following conditions.

| | |
|---|---|
| MS: | apparatus ... Finigan Mat (GC-MS). |
| $^{1}$H-NMR/$^{13}$C-NMR: | apparatus ... JEOL GSX270, |

solvent ... $CDCl_3$.

IR: apparatus ... Perkin Elmer 1600 Series (FT-IR), KBr sand method.

EXAMPLE 2

Preparation of Solid Catalyst Component:

Into a 200-ml round-bottom flask the inside atmosphere of which had been sufficiently replaced with nitrogen gas and which was equipped with a stirrer were introduced 10 g of diethoxymagnesium and 80 ml of toluene. The contents were stirred to obtain a suspension. To this suspension was added 20 ml of titanium tetrachloride. The mixture was heated and, at the time when the temperature thereof had reached 62°C, 1.0 ml of diethyl phthalate was added. This mixture was then heated and, at the time when the temperature thereof had reached 110°C, 3.5 ml of dioctyl phthalate was added. The resulting mixture was heated to 112°C and stirred at this temperature for 1.5 hours to allow a reaction to proceed. After completion of the reaction, the reaction product was washed twice with 100 ml of toluene heated at 90°C. To the washed reaction product were added 20 ml of titanium tetrachloride and 80 ml of toluene. This mixture was heated to 100°C and stirred for 2 hours to allow a reaction to proceed. After completion of the reaction, the reaction product was washed 10 times with 100 ml of n-heptane warmed at 40°C to obtain a solid catalyst component. The titanium content of this solid catalyst component was measured and found to be 2.46% by weight.

Formation of Polymerization Catalyst and Polymerization of Olefin:

Into a 2.0-liter autoclave the inside atmosphere of which had been sufficiently replaced with nitrogen gas and which was equipped with a stirrer were introduced 1.32 mmol of triethylaluminum, 0.13 mmol of cyclohexylcyclopentyldimethoxysilane, and 0.0066 mmol of the solid catalyst component in terms of the amount of titanium atoms. Thus, a polymerization catalyst was formed. Thereafter, 1.8 liters of hydrogen gas and 1.4 liters of liquefied propylene were introduced into the autoclave to conduct polymerization at 70°C for 30 minutes. The weight (a) of the polymer thus obtained was 349.1 g. When this polymer was extracted with boiled n-heptane for 6 hours, the n-heptane-insoluble amount (b) was 343.2 g. The catalytic activity was 23,900 g per g of the solid catalyst component used. The yield of the wholly crystalline polymer was 98.3%. The polymer yielded had an MI of 3.6 g/10-min, a molecular weight distribution of 7.1, and a melting point of 164.0°C.

The catalytic activity per unit weight of the solid catalyst component used was calculated using the following equation.

$$\text{Catalytic Activity} = \frac{\text{(a) (g)}}{\text{Solid Catalyst Component (g)}}$$

The yield of wholly crystalline polymer was calculated using the following equation.

$$\text{Yield of Wholly Crystalline Polymer} = \frac{\text{(b)}}{\text{(a)}} \times 100\ (\%)$$

The molecular weight distribution was determined using the following equation.

$$\text{Molecular Weight Distribution} = \frac{\text{Weight-average Molecular Weight } (M_w)}{\text{Number-average Molecular Weight } (M_n)}$$

As described above, the organosilicon compound used in the present invention, when used as an electron donor serving as one component of an olefin polymerization catalyst, gives a polyolefin having a broad molecular weight distribution and high crystallinity, while retaining high performances with respect to catalytic activity and the yield of highly stereoregular polymer which performances are equal to or higher than those of conventionally known high-performance catalysts.

EXAMPLE 3

Preparation of Solid Catalyst Component:

In a 200 mℓ-volume round flask equipped with a stirrer having been thoroughly purged with nitrogen gas were

charged 10 g of diethoxymagnesium and 80 mℓ of toluene to prepare a suspension. To the suspension was added 20 mℓ of titanium tetrachloride, and the mixture was heated to 60°C, at which 1.0 mℓ of diethyl phthalate was added. The mixture was further heated up to 110°C, at which 2.5 mℓ of di-iso-octyl phthalate was added thereto. The mixture was further heated to 112°C, at which the mixture was allowed to react for 1.5 hours with stirring. After completion of the reaction, the reaction mixture was washed with two 100 mℓ portions of toluene at 90°C, and 20 mℓ of titanium tetrachloride and 80 mℓ of toluene were added thereto. The mixture was heated to 100°C, and it was allowed to react at that temperature for 2 hours while stirring. After completion of the reaction, the reaction mixture was washed with ten 100 mℓ portions of n-heptane at 40°C to obtain a solid catalyst component. The solid content of the solid catalyst component, separated by solid-liquid separation, was found to have a titanium content of 2.74%.

Preparation of Catalyst System and Polymerization:

Propylene was polymerized in the same manner as in Example 2, except for using the above-prepared solid catalyst component. The reaction results are shown in Table 5.

EXAMPLE 4

Preparation of Solid Catalyst Component:

In a 200 mℓ-volume round flask equipped with a stirrer having been thoroughly purged with nitrogen gas were charged 10 g of diethoxymagnesium and 80 mℓ of toluene to prepare a suspension. To the suspension was added 20 mℓ of titanium tetrachloride, and the mixture was heated to 62°C, at which 1.0 mℓ of diethyl phthalate was added. The mixture was heated up to 110°C, at which 4.0 mℓ of di-iso-octyl phthalate was added thereto. The mixture was further heated to 112°C, at which the mixture was allowed to react for 1.5 hours with stirring. After completion of the reaction, the reaction mixture was washed with two 100 mℓ portions of toluene at 90°C, and 20 mℓ of titanium tetrachloride and 80 mℓ of toluene were added thereto. The mixture was heated to 100°C, and it was allowed to react at that temperature for 2 hours while stirring. After completion of the reaction, the reaction mixture was washed with ten 100 mℓ portions of n-heptane at 40°C to obtain a solid catalyst component. The solid content of the solid catalyst component, separated by solid-liquid separation, was found to have a titanium content of 2.17%.

Preparation of Catalyst System and Polymerization:

Propylene was polymerized in the same manner as in Example 2, except for using the above-prepared solid catalyst component. The reaction results are shown in Table 5.

TABLE 5

| Example No. | Weight of Polymer Produced (g) | n-Heptane Insoluble Content (g) | Polymerization Activity (g/g-cat.) | Yield of Total Crystalline Polymer (%) | MI (g/10 min) | Molecular Weight Distribution |
|---|---|---|---|---|---|---|
| Example 3 | 293.1 | 289.0 | 25,500 | 98.6 | 3.6 | 7.1 |
| Example 4 | 349.1 | 343.2 | 23,900 | 98.3 | 3.6 | 7.1 |

It is seen from the Examples that polymerization of an olefin in the presence of the catalyst of the present inveniton provides an olefin polymer having high stereoregularity and broad molecular weight distribution in high yield.

COMPARATIVE EXAMPLE 1

Preparation of Solid Catalyst Component:

80 ml of toluene and 10 g of diethoxymagnesium were put in a flask which had been fully purged with nitrogen gas, and they were mixed to obtain a suspension. The suspension was stirred at room temperature for 10 minutes, and 20 ml of $TiCl_4$ was then added to the suspension. This liquid mixture was gradually heated and, at the time when the temperature of the mixture had reached 62°C, 1.0 ml of diethyl phthalate was added. The mixture was then heated and, at the time when the temperature thereof had reached 110°C, 3.5 ml of bis(2-ethylhexyl) phthalate was added. The resulting mixture was heated to 112°C and allowed to react at this temperature for 2 hours. After completion of the reaction, the supernatant was removed, and the residual reaction product was washed twice with 100 ml of toluene. Into this flask were introduced 20 ml of $TiCl_4$ and 80 ml of toluene. This liquid mixture was allowed to react at 100°C for 2 hours. After completion of the reaction, the reaction product was washed 10 times with 100 ml of n-heptane to obtain a solid catalyst component. This solid catalyst component was analyzed to determine ingredients contained therein. As a result, the ingredient contents were found to be as follows: Ti = 2.46 wt%, Mg = 18.0 wt%, Cl = 62.0 wt%, diethyl phthalate = 6.24 wt%, ethyl 2-ethylhexyl phthalate = 2.90 wt%, bis(2-ethylhexyl) phthalate = 2.50 wt%.

Formation of Catalyst and Polymerization

Into a 2-liter autoclave equipped with a stirrer, which had been fully purged with nitrogen gas, were introduced 1.32 mmol of triethylaluminum, 0.13 mmol of dicyclohexyldimethoxysilane, and 0.0066 mmol of the solid catalyst component in terms of the amount of Ti atoms. Thus, a polymerization catalyst was formed. Thereafter, 1.8 liters of hydrogen gas and 1.4 liters of liquefied propylene were introduced into the autoclave to conduct polymerization at 70°C for 30 minutes. The weight of the polymer yielded through the polymerization reaction was 250.5 g. When this polymer was extracted with boiled n-heptane for 6 hours, the weight of the polymer dissolved in the n-heptane was 4.91 g. The catalytic activity was 19,500 g per g of the solid catalyst component used. The yield of the wholly crystalline polymer was 98.3%. The polymer yielded had an MI of 3.5 g/10-min, a melting point of 163.0°C, and a molecular weight distribution of 6.5.

COMPARATIVE EXAMPLE 2

An experiment was carried out in the same manner as in COMPARATIVE Example 1, except that cyclohexylmethyldimethoxysilane was used in place of the dicyclohexyldimethoxysilane used in catalyst formation. As a result, a polymer was obtained in an amount of 300.6 g. The catalytic activity was 23,400 g per g of the solid catalyst component. The yield of wholly crystalline polymer was 98.5%. The polymer yielded had an MI of 3.0 g/10-min, a melting point of 162.5°C, and a molecular weight distribution of 6.0.

## Claims

**1.** A catalyst for the polymerization of olefins comprising:

(A) a solid catalyst component prepared by contacting compounds (a') to (d'):

(a') a magnesium compound represented by $Mg(OR^8)_{2-p}X^3_p$ wherein $R^8$ represents an alkyl group having 1 to 4 carbon atoms or a phenyl group, $X^3$ represents chlorine or bromine, and p represents 0 or 1;
(b') a titanium compound represented by $Ti(OR^9)_qX^4_{4-q}$ wherein $R^9$ represents an alkyl group having 1 to 4 carbon atoms, $X^4$ represents a halogen, and q is 0, 1, 2 or 3;
(c') at least one phthalic diester represented by

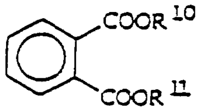

wherein $R^{10}$ and $R^{11}$ may be the same or different and each represents an alkyl group having 1 to 4 carbon atoms; and
(d') at least one phthalic diester represented by

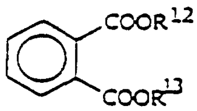

wherein $R^{12}$ and $R^{13}$ may be the same or different and each represents an alkyl group having 4 to 12 carbon atoms, provided that the total number of carbon atoms of $R^{12}$ and $R^{13}$ is from 10 to 20;

(B) an organoaluminum compound; and

(C) at least one organosilicon compound selected from the group consisting of (1) di-n-propyl dimethoxysilane, (2) di-iso-propyl dimethoxysilane, (3) di-n-butyl dimethoxysilane, (4) di-iso-butyl dimethoxysilane, (5) di-t-butyl dimethoxysilane, (6) dicyclopentyl dimethoxysilane, and (7) cyclohexyl cyclopentyl dimethoxysilane.

**Patentansprüche**

1. Katalysator für die Polymerisation von Olefinen, umfassend:

(A) einen festen Katalysatorbestandteil, hergestellt durch Inkontaktbringen der Verbindungen (a') bis (d'):

(a') eine Magnesiumverbindung, die durch $Mg(OR^8)_{2-p}X^3_p$ wiedergegeben wird, wobei $R^8$ eine Alkylgruppe mit 1 bis 4 Kohlenstoffatomen oder eine Phenylgruppe bedeutet, $X^3$ Chlor oder Brom bedeutet und p 0 oder 1 bedeutet;

(b') eine Titanverbindung, die durch $Ti(OR^9)_qX^4_{4-q}$ wiedergegeben wird, wobei $R^9$ eine Alkylgruppe mit 1 bis 4 Kohlenstoffatomen bedeutet, $X^4$ ein Halogen bedeutet und q 0, 1, 2 oder 3 ist;

(c') mindestens ein Phthalsäurediester, der wiedergegeben wird durch

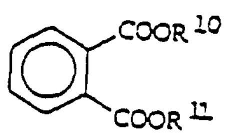

wobei $R^{10}$ und $R^{11}$ gleich oder verschieden sein können und jeweils eine Alkylgruppe mit 1 bis 4 Kohlenstoffatomen bedeuten; und

(d') mindestens ein Phthalsäurediester, der wiedergegeben wird durch

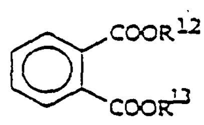

wobei $R^{12}$ und $R^{13}$ gleich oder verschieden sein können und jeweils eine Alkylgruppe mit 4 bis 12 Kohlenstoffatomen bedeuten, mit der Maßgabe, dass die Gesamtzahl der Kohlenstoffatome von $R^{12}$ und $R^{13}$ 10 bis 20 beträgt;

(B) eine Organoaluminiumverbindung; und

(C) mindestens eine Organosiliciumverbindung, ausgewählt aus der Gruppe bestehend aus (1) Di-n-propyldimethoxysilan, (2) Di-iso-propyldimethoxysilan, (3) Di-n-butyldimethoxysilan, (4) Di-iso-butyldimethoxysilan, (5) Di-t-butyldimethoxysilan, (6) Dicyclopentyldimethoxysilan und (7) Cyclohexylcyclopentyldimethoxysilan.

## Revendications

**1.** Catalyseur pour la polymérisation d'oléfines comprenant :

(A) un composant de catalyseur solide préparé par mise en contact des composés (a') à (d') :

(a') un composé du magnésium représenté par $Mg(OR^8)_{2-p}X^3_p$ où $R^8$ représente un groupe alkyle ayant de 1 à 4 atomes de carbone ou un groupe phényle, $X^3$ représente le chlore ou le brome, et p représente 0 ou 1 ;
(b') un composé du titane représenté par $Ti(OR^9)_qX^4_{4-q}$ où $R^9$ représente un groupe alkyle ayant de 1 à 4 atomes de carbone, $X^4$ représente un halogène, et q vaut 0, 1, 2 ou 3 ;
(c') au moins un diester phtalate représenté par :

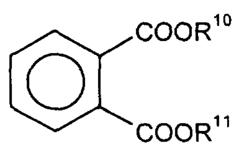

où $R^{10}$ et $R^{11}$ peuvent être identiques ou différents et représentent chacun un groupe alkyle ayant de 1 à 4 atomes de carbone ; et
(d') au moins un diester phtalate représenté par :

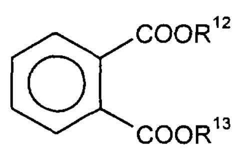

où $R^{12}$ et $R^{13}$ peuvent être identiques ou différents et représentent chacun un groupe alkyle ayant de 4 à 12 atomes de carbone, du moment que le nombre total d'atomes de carbone de $R^{12}$ et $R^{13}$ est de 10 à 20 ;

(B) un composé organique de l'aluminium ; et
(C) au moins un composé organique du silicium choisi dans le groupe constitué par (1) le di-n-propyldiméthoxysilane, (2) le diisopropyldiméthoxysiliane, (3) le di-n-butyl-diméthoxysilane, (4) le diisobutyl-diméthoxysilane, (5) le di-t-butyldiméthoxysilane, (6) le dicyclopentyl-diméthoxysilane, et (7) le cyclohexyl-cyclopentyldiméthoxysilane.

FIG. 1

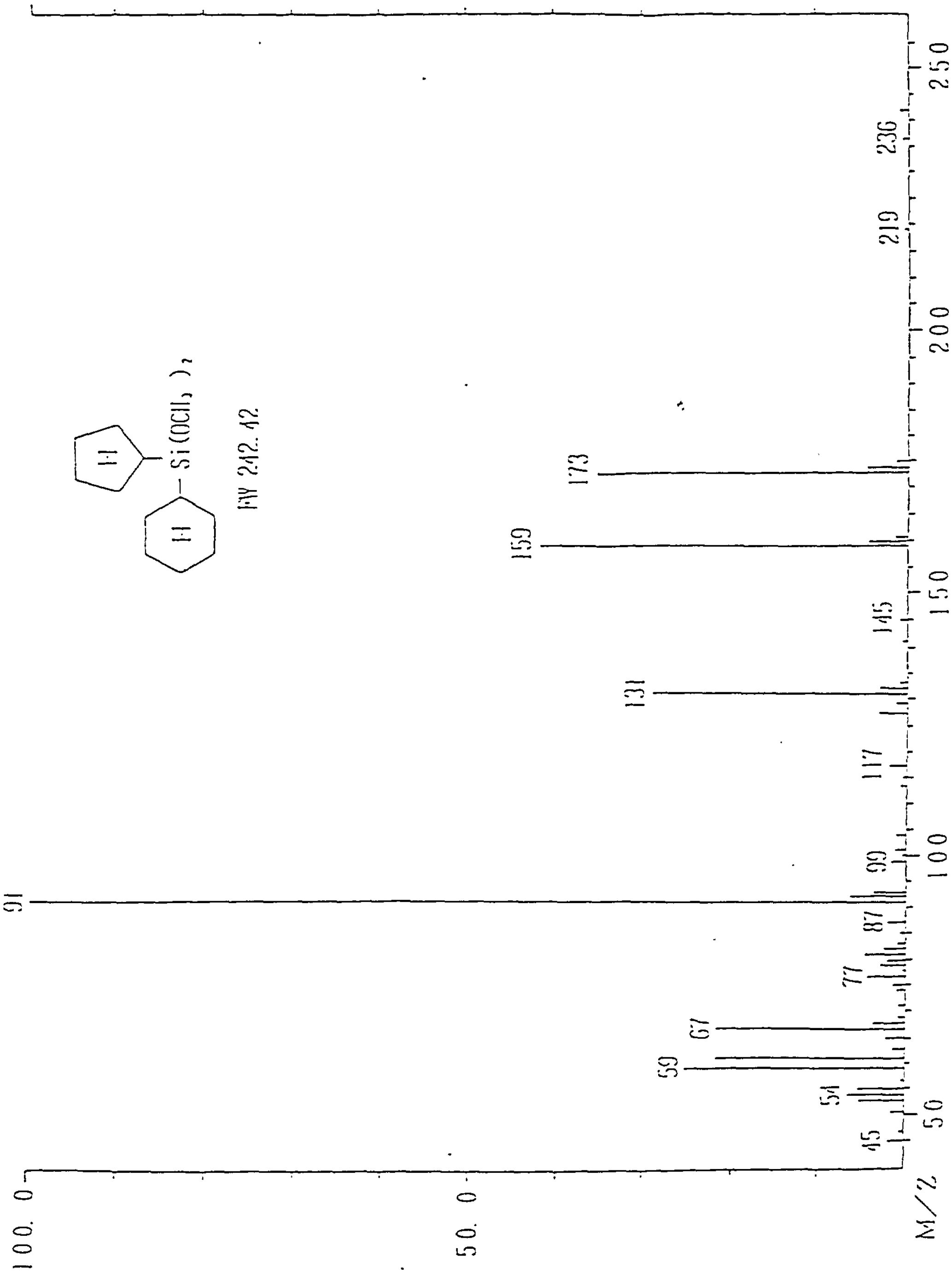
100.0
50.0
M/Z
45
50
54
59
67
77
87
91
99
100
117
131
145
150
159
173
200
219
236
250
FW 242.42

FIG. 2

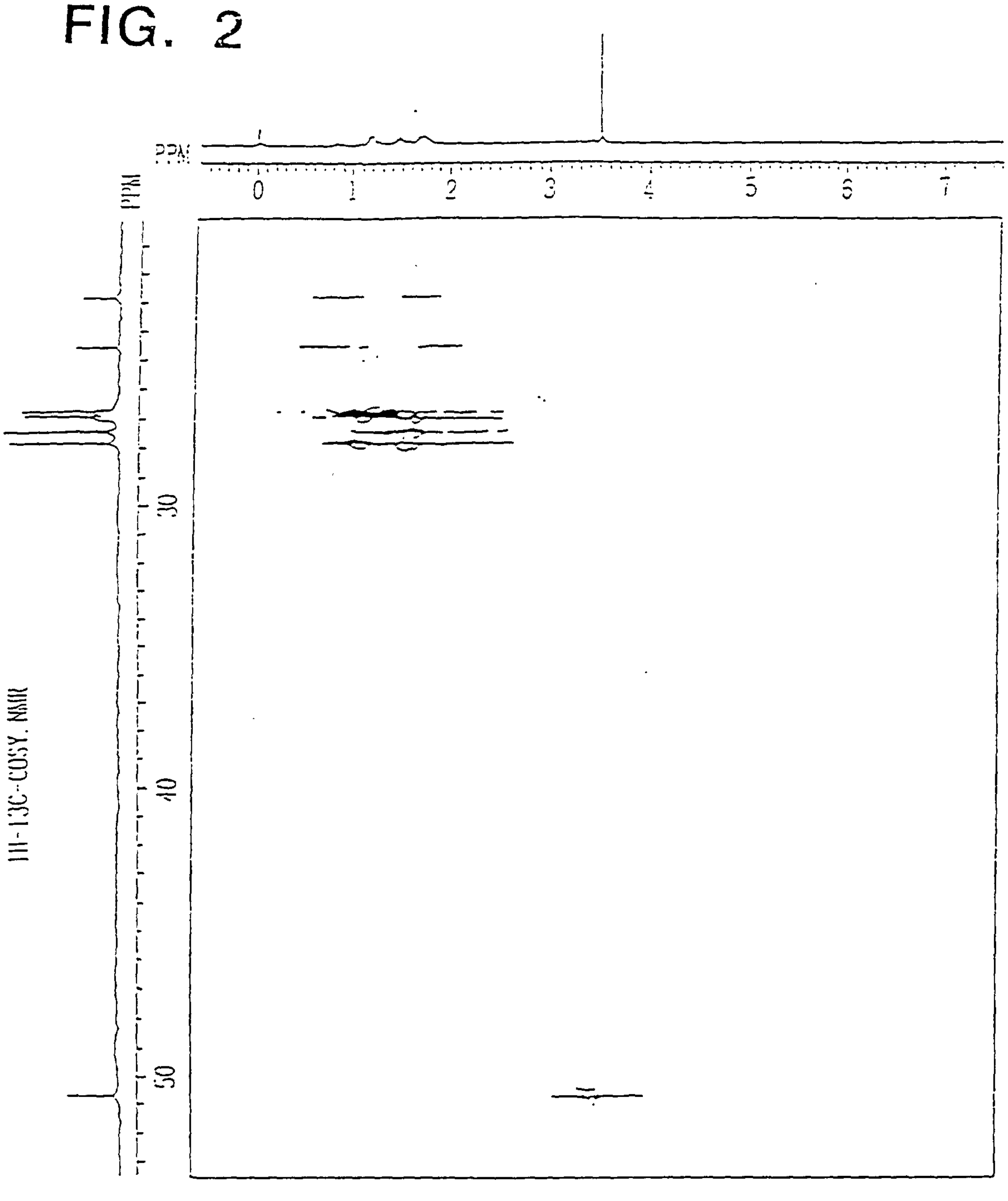

FIG. 3

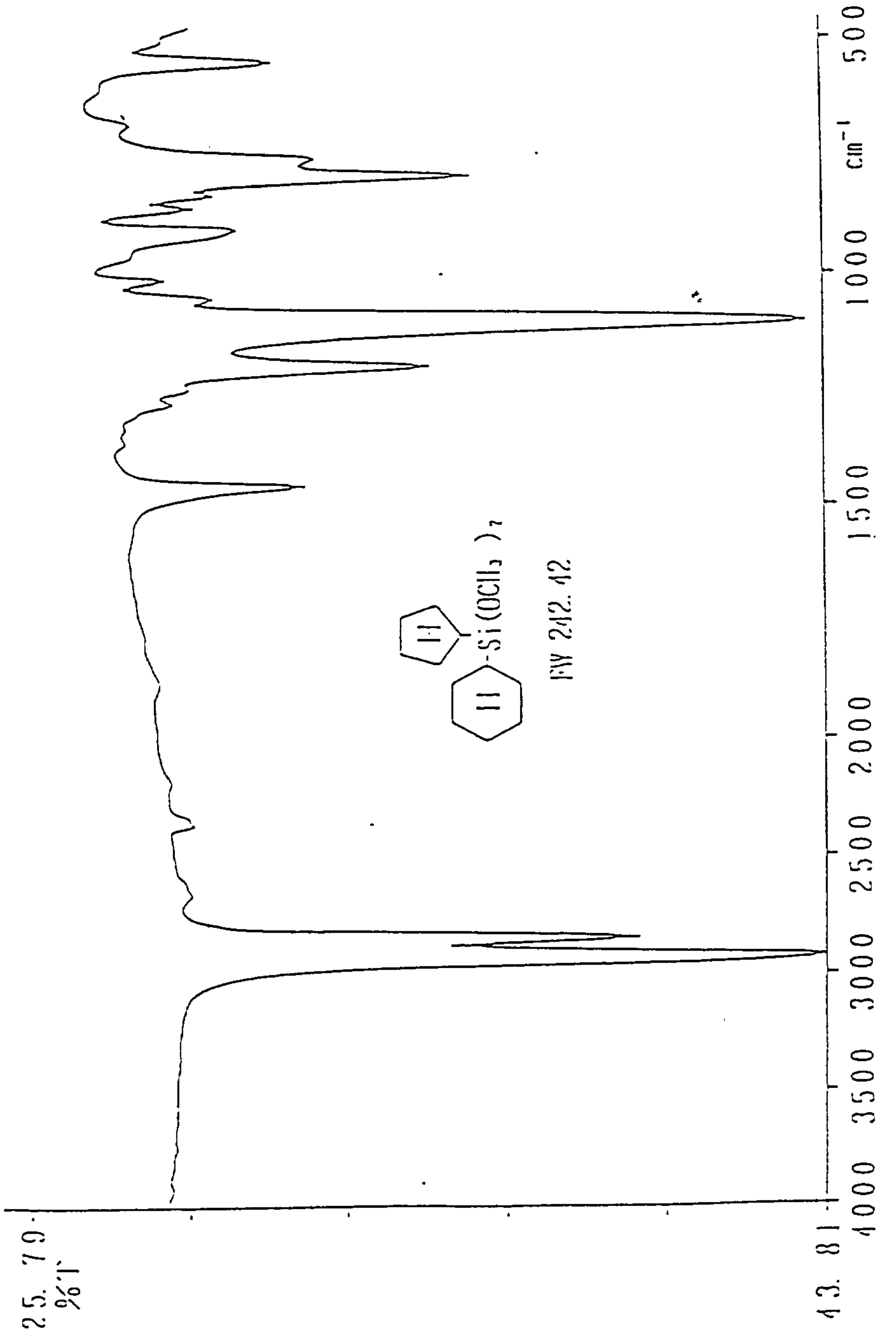
125.79
%T
43.81
4000
3500
3000
2500
2000
1500
1000
500
cm-1
FW 242.42